# EUROPEAN PATENT APPLICATION

(11) **EP 2 846 289 A1**
(43) Date of publication of application: **11.03.2015**
(21) Application number: 13425046.3
(22) Date of filing: 05.09.2013
(51) Int. Cl.: G06K 9/00

(54) **Method for the evaluation of land conservation**

(71) Applicant: Universita'del Salento, 73100 Lecce (IT)
(72) Inventor: Zurlini, Giovanni, 73100 Lecce (IT); Petrosillo, Irene, 73010 Surbo ((LE) (IT); Semeraro, Teodoro, 72100 Brindisi (IT); Aretano, Roberta, 72100 Brindisi (IT); Zaccarelli, Nicola, 73100 Lecce (IT)
(74) Representative: Bruni, Giovanni

(57) **Abstract**

Method for quantifying the territorial social-ecological value comprising the steps of: defining a classification of the use of the soil; acquiring at least an aerial photographic image comprising the territorial region of interest; subdivision of the region of interest in homogeneous areas for the use of the soil; associating a qualifying-quantifying indicator defining its value in social-ecological terms to each class of the use of the soil.

## Description

The present invention relates to an objective method for evaluating the efficacy in territorial planning and management processes. For example, the method could be used to regulate the multiple uses interesting a determined space paying also attention to the composition of a plurality of interests often discordant between each other and whose public dimension is often significant.

The proposed method allows in fact the definition of an objective social-ecological indicator, which can be associated to territorial structures and functions, which can be applied in a repeatable manner to a portion of the territory of interest.

For doing so, prior to the application of the method described in the following, it is needed to choose a classification criterion of the use of the soil. The use of the soil refers to ways and aims for which the territory and its resources are generally used by mankind. The classification of the use of the soil occurs by means of the definition of a series of classes of the use of the soil (C₁... Cₙ) and of a series of criteria to assign a homogenous region individuated by orthophotography to one of these classes of the use of the soil.

As a way of example, a classification criterion of the use of the soil could comprise the following classes: urban areas, rocks, agricultural soil, uncultivated soil, forest, beach, humid areas.

Therefore the method for quantifying the territorial value according to the present invention comprises the steps of:
a) defining a classification criterion of the use of the soil individuating a series of classes of the use of the soil (C₁... Cₙ) and a series of criteria to assign a homogenous region (k) individuated by orthophotography to one of these classes of the use of the soil;
b) acquiring at least an aerial photographic image (1) comprising the territorial region of interest (orthophotograph);
   the image (1) can be possibly converted in digital format, for example by means of a scanner, if not yet available in this format;
c) identifying inside said image (1) the territorial region of interest (100);
d) subdivision of the region of interest (100) in homogenous areas (k). Each one of such areas is delimited by a polygon. In this way each polygon represents a homogenous area different for nature and aspect from what is around it.
e) Associating, by video-computer interpretation, a class of the use of the soil (C₁... Cn) according to one of the criteria defined at point a) to each homogenous area k individuated at point d).
f) Calculating the superficial extension (Aₖ) of each homogenous area (k) individuated at point d),
g) associating a qualifying-quantifying indicator (VCₖ) defining its value in social-ecological terms to each class of the use of the soil (C₁... Cₙ). VCₖ is the economic value associated to the ecosystem services which can be supplied by the class of the use of the soil associated to the polygon.
h) Calculating, for each homogenous area, the product of the superficial extension measured at point f) for the qualifying-quantifying indicator associated at point g);
i) calculating the value of the indicator (ESV) associable to the region of interest (100) as a sum of all the products calculated at point h) for all the homogeneous areas.

The method for associating an indicator of value to a territorial region just described can be conveniently used to quantify the variations experienced by the territorial region of interest in time, and in particular after the planning processes carried out by mankind.

Therefore one can proceed as follows:
1) acquiring an aerial photographic image (1) comprising the representation of the territorial region of interest (100) and relative to the time instant t₀ (prior to the planning activity);
2) applying the method according to steps from a) to i) to the image (1) acquired at point 1), and associating a first value ESV(t₀) relative to the instant (t₀) to the territorial region of interest (100);
3) acquiring a second aerial photographic image comprising the representation of the same territorial region of interest (100) and relative to the time instant t₁ (subsequent to the planning activity);
4) applying the method according to steps from a) to g) to the image (2) acquired at point 2), and associating a second value ESV(t₁) relative to the instant (t₁) to the territorial region of interest (100);
5) comparison of the values ESV(t₁) - ESV(t₀).

The entity of the variation of the indicator ESV, referred to the time interval t₀-t₁ in which it is occurred, is useful to quantify and evaluate the entity and the speed of the social-ecological changes induced by the territorial planning and management processes. For doing so it is needed that the first image is relative to a time instant t₀ prior to the planning, while the second image is relative to a time instant t₁ subsequent to the planning. The application of the method here described could be conveniently adopted by public administrations, and in particular by municipalities for example while adopting the General Urban Plans, to quantify the transformations produced by the new planning on the territory.

In particular, such method could be adopted both during the development of the new planning to understand if this one produces social-ecological unbalances strongly altering the starting condition of the area subject to the planning, and after the planning to understand if the goals developed in the plan have been achieved.

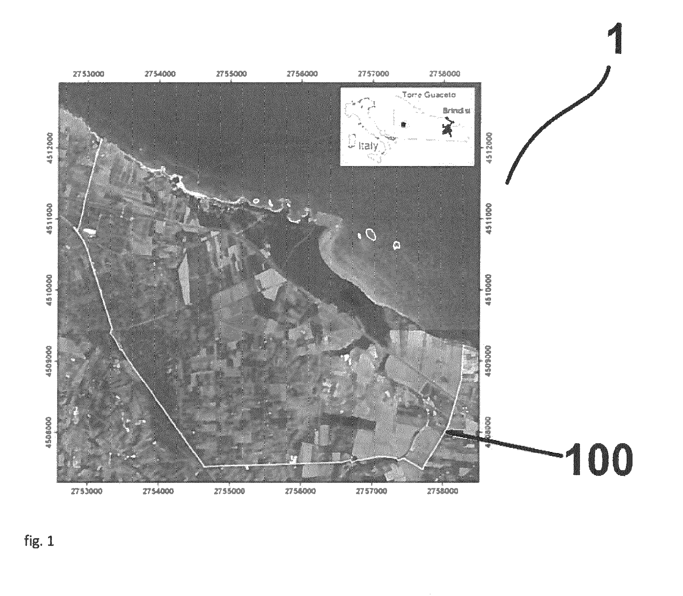

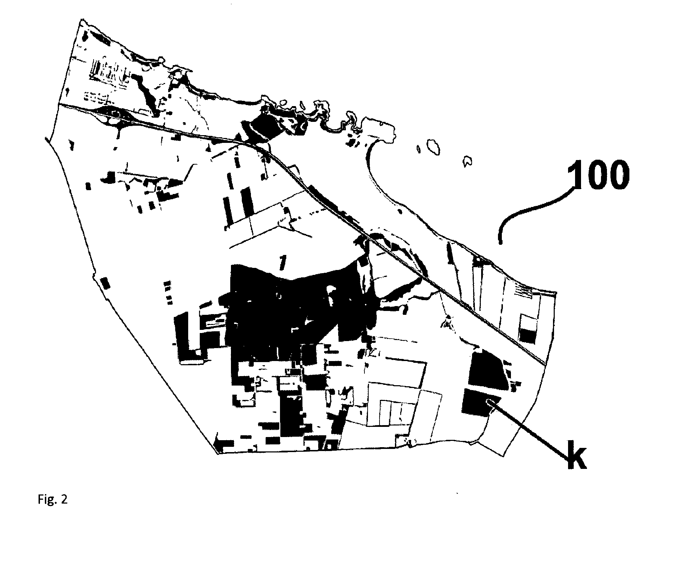

## Claims

1. Method for quantifying the territorial social-ecological value comprising the steps of:
a) defining a classification of the use of the soil, said classification comprising the definition of a series of classes of the use of the soil (C₁... Cₙ) and a series of criteria to assign a homogenous territorial region to one of these classes of the use of the soil (C₁... Cₙ);
b) acquiring at least an aerial photographic image (1) comprising a territorial region of interest (100);
c) identifying inside said image (1) the territorial region of interest (100);
d) subdivision of the region of interest (100) in homogenous areas (k).
e) Associating a class of the use of the soil (C₁... Cn) according to one of the criteria defined at point a) to each homogenous area (k) individuated at point d).
f) Calculating the superficial extension (Aₖ) of each homogenous area (k) individuated at point d),
g) associating a qualifying-quantifying indicator (VCₖ) defining its value in social-ecological terms to each class of the use of the soil (C₁... Cₙ). VCₖ is the economic value associated to the ecosystem services which can be supplied by the class of the use of the soil associated to the polygon.
h) Calculating, for each homogenous area, the product of the superficial extension measured at point f) for the qualifying-quantifying indicator associated at point g);
i) calculating the value of the indicator (ESV) associable to the region of interest (100) as a sum of all the products calculated at point h) for all the homogeneous areas.

2. Method for quantifying the variation in time of the territorial social-ecological value comprising the steps of:
1) acquiring an aerial photographic image (1) comprising the representation of the territorial region of interest (100) and relative to the time instant t₀;
2) applying the method according to the claim to the image (1) acquired at point 1), and associating a first value ESV(t₀) relative to the instant (t₀) to the territorial region of interest (100);
3) acquiring a second aerial photographic image comprising the representation of the same territorial region of interest (100) and relative to the time instant t₁;
4) applying the method according to steps from a) to g) to the image (2) acquired at point 2), and associating a second value ESV(t₁) relative to the instant (t₁) to the territorial region of interest (100);
5) calculating the difference ESV(t₁) - ESV(t₀).
